# EUROPEAN PATENT APPLICATION

(11) **EP 4 775 332 A1**
(43) Date of publication of application: **15.07.2026**
(21) Application number: 26150427.8
(22) Date of filing: 06.01.2026
(51) Int. Cl.: B22F 10/28, B22F 10/36, B22F 12/45, B22F 12/46, B22F 12/49, G02B 26/08, G02F 1/29, B33Y 10/00, B33Y 30/00, B33Y 50/02, B22F 12/47

(54) **APPARATUS AND METHOD FOR ADDITIVELY MANUFACTURING THREE-DIMENSIONAL OBJECTS**

(30) Priority: 08.01.2025 US 202519013163
(71) Applicant: General Electric Company, Cincinnati, Ohio 45215 (US); Concept Laser GmbH, 96215 Lichtenfels (DE)
(72) Inventor: ZIMMERMANN, Maik, 96215 Lichtenfels (DE); EICHENBERG, Boris, 96215 Lichtenfels (DE); STEELE, William Joseph, West Chester, 45069 (US)
(74) Representative: Openshaw & Co.

(57) **Abstract**

A method for additively manufacturing three-dimensional objects includes generating a laser beam with a laser beam source and splitting the laser beam to form a plurality of beamlets. The plurality of beamlets are collimated via an optical device. The method also includes independently controlling respective beamlets of the plurality of beamlets via respective channels of a multi-channel optical modulator disposed downstream of the optical device to at least one of steer or modulate the respective beamlets. A scanning device disposed downstream of the multi-channel optical modulator scans the respective beamlets over at least a portion of a target plane.

## Description

### FIELD

The present disclosure relates to additive manufacturing of three-dimensional objects.

### BACKGROUND

Three-dimensional objects may be additively manufactured using a powder bed fusion process in which an energy or laser beam is directed onto a powder bed to melt and/or sinter sequential layers of powder material. The properties of the three-dimensional object formed by melting and/or fusing the powder material may depend at least in part on one or more characteristics of the energy beam. The laser beam has beam properties defined by one or more laser beam parameter(s) or a beam profile defined by one or more laser beam parameter(s).

### BRIEF DESCRIPTION OF THE DRAWINGS

A full and enabling disclosure of the present disclosure, including the best mode thereof, directed to one of ordinary skill in the art, is set forth in the specification, which makes reference to the appended FIG.s, in which:
FIG. 1 is a schematic diagram of an apparatus for additively manufacturing a three-dimensional object in accordance with an exemplary aspect of the present disclosure.
FIG. 2A is a schematic perspective diagram of an apparatus for additively manufacturing a three-dimensional object in accordance with an exemplary aspect of the present disclosure.
FIG. 2B is a schematic side view diagram of the apparatus for additively manufacturing a three-dimensional object of FIG. 2A in accordance with an exemplary aspect of the present disclosure.
FIG. 3 is a flow diagram depicting an embodiment of a method of additively manufacturing a three-dimensional object in accordance with various aspects of the present disclosure.
FIG. 4 is a block diagram depicting an example computing system according to exemplary embodiments of the present disclosure.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

As used herein, the terms "first", "second", and "third" may be used interchangeably to distinguish one component from another and are not intended to signify location or importance of the individual components.

The terms "upstream" and "downstream" refer to the relative direction with respect to an energy or laser beam along an optical pathway. For example, "upstream" refers to the direction from which the laser beam originates or emanates, and "downstream" refers to the direction to which the laser beam is propagating.

The terms "coupled," "fixed," "attached to," and the like refer to both direct coupling, fixing, or attaching, as well as indirect coupling, fixing, or attaching through one or more intermediate components or features, unless otherwise specified herein.

The singular forms "a", "an", and "the" include plural references unless the context clearly dictates otherwise.

The phrases "from X to Y" and "between X and Y" each refers to a range of values inclusive of the endpoints (i.e., refers to a range of values that includes both X and Y). Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

Approximating language, as used herein throughout the specification and claims, is applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 1, 2, 4, 10, 15, or 20 percent margin. These approximating margins may apply to a single value, either or both endpoints defining numerical ranges, and/or the margin for ranges between endpoints.

As described herein, the presently disclosed subject matter involves the use of additive manufacturing machines or systems. As used herein, the term "additive manufacturing" refers generally to manufacturing technology in which components are manufactured in a layer-by-layer manner. An exemplary additive manufacturing machine may be configured to utilize any suitable additive manufacturing technology. The additive manufacturing machine may utilize an additive manufacturing technology that includes a powder bed fusion (PBF) technology, such as a direct metal laser melting (DMLM) technology, a selective laser melting (SLM) technology, a directed metal laser sintering (DMLS) technology, or a selective laser sintering (SLS) technology. In an exemplary PBF technology, thin layers of powder material are sequentially applied to a build plane and then selectively melted or fused to one another in a layer-by-layer manner to form one or more three-dimensional objects. Additively manufactured objects are generally monolithic in nature and may have a variety of integral sub-components.

Additionally or alternatively suitable additive manufacturing technologies may include, for example, Fused Deposition Modeling (FDM) technology, Direct Energy Deposition (DED) technology, Laser Engineered Net Shaping (LENS) technology, Laser Net Shape Manufacturing (LNSM) technology, Direct Metal Deposition (DMD) technology, Digital Light Processing (DLP) technology, and other additive manufacturing technologies that utilize an energy beam or other energy source to solidify an additive manufacturing material such as a powder material. In fact, any suitable additive manufacturing modality may be utilized with the presently disclosed the subject matter.

Additive manufacturing technology may generally be described as fabrication of objects by building objects point-by-point, line-by-line, layer-by-layer, typically in a vertical direction. Other methods of fabrication are contemplated and within the scope of the present disclosure. For example, although the discussion herein refers to the addition of material to form successive layers, the presently disclosed subject matter may be practiced with any additive manufacturing technology or other manufacturing technology, including layer-additive processes, layer-subtractive processes, or hybrid processes.

The additive manufacturing processes described herein may be used for forming components using any suitable material. For example, the material may be metal, ceramic, polymer, epoxy, photopolymer resin, plastic, or any other suitable material that may be in solid, powder, sheet material, wire, or any other suitable form, or combinations thereof. Additionally, or in the alternative, exemplary materials may include metals, ceramics, or binders, as well as combinations thereof. Exemplary ceramics may include ultra-high-temperature ceramics, and/or precursors for ultra-high-temperature ceramics, such as polymeric precursors. Each successive layer may be, for example, between about 10 micrometers (µm) and 200 µm, although the thickness may be determined based on any number of parameters and may be any suitable size.

As used herein, the term "build plane" refers to a plane defined by a surface upon which an energy beam impinges to selectively irradiate and thereby consolidate powder material during an additive manufacturing process. Generally, the surface of a powder bed defines the build plane. During irradiation of a respective layer of the powder bed, a previously irradiated portion of the respective layer may define a portion of the build plane. Prior to distributing powder material across a build module, a build plate that supports the powder bed generally defines the build plane.

As used herein, the term "consolidate" or "consolidating" refers to solidification of powder material as a result of irradiating the powder material, including by way of melting, fusing, sintering, or the like.

The present disclosure is directed to an additive manufacturing apparatus using multi-channel modulation device. A modulation device may be used to control or modulate an intensity, phase, or polarization of a laser beam. A modulation device may also be actuated to modify a position of the laser beam. That is, actuation of an optical element of the modulation device modifies the position or causes an angular deflection of the laser beam from a nominal beam path trajectory to provide a modified beam position. The term "angular deflection" generally refers to a change in direction of a laser beam after passing through a modulation device that may be quantified by a resulting angle of the laser beam relative to an axis defining the original incoming direction of the laser beam. An exemplary embodiment of a modulation device is an electro-optical modulation device or an acousto-optical modulation device. Electro-optical modulation devices utilize an electro-optic effect to modulate or change an angular deflection of a laser beam. Acousto-optical modulation devices modulate or change an angular deflection of a laser beam by shifting the phase of the light waves of the laser beam using sound waves.

Embodiments of the present disclosure split a laser beam into a plurality of beamlets where each beamlet can be controlled independently or separately. The controlling of a single beamlet can be a switching, modulation of the phase, amplitude or polarization state, and or a steering of the beamlet in a defined angular deflection. In exemplary embodiments, a laser beam can be split among several "stacked" planar beamlets along a single axis. Each beamlet is incident upon a respective channel of a muti-channel optical modulation device, and each respective channel of the muti-channel optical modulation device is independently controlled to modulate and/or steer the respective beamlet toward a target area or plane. In exemplary embodiments, the multi-channel optical modulator is a planar multi-channel optical modulator. The planar channels of the planar multi-channel optical modulator can be used to steer the beamlet along two axes, such that multiple parallel output beam "slices" can impinge on the targeted area such as, by way of non-limiting example, for pre-heating, melting and post-cooling control.

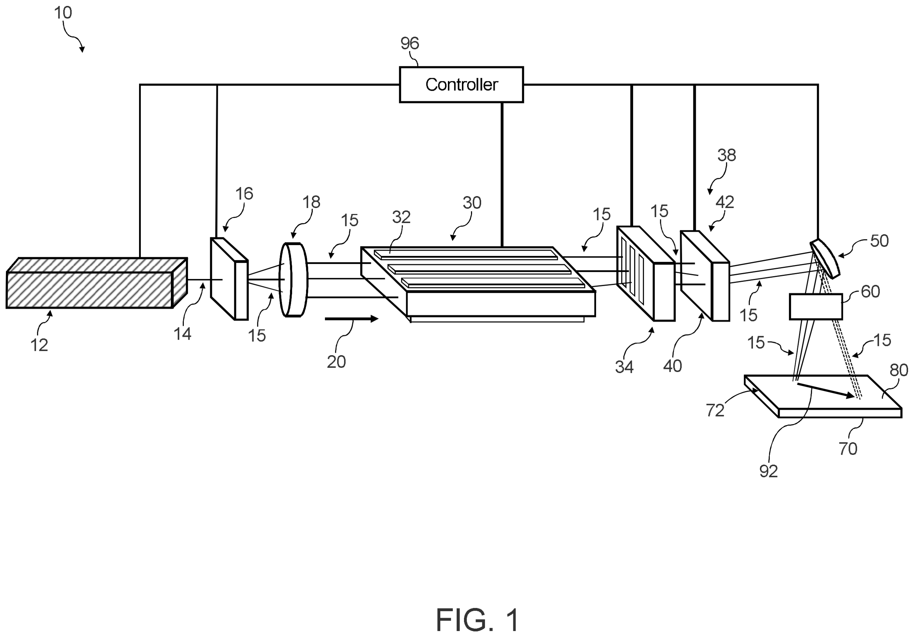

Referring now to FIG. 1, an exemplary embodiment of an apparatus 10 for additively manufacturing three-dimensional objects is illustrated. The apparatus 10 includes several components arranged to effectively generate a laser beam 14 that is manipulated and directed to form a three-dimensional object on a build platform 70.

In exemplary embodiments, one or more laser beam sources 12 are configured to generate one or more laser beams 14. The laser beam source 12 can include various types of lasers suitable for additive manufacturing processes such as, by way of non-limiting example, fiber lasers or CO₂ lasers, depending on the specific applications. The generated laser beam 14 is first directed towards one or more beam splitting devices 16, which are disposed downstream of the one or more laser beam sources 12. The beam splitting device 16 is configured to split the laser beam 14 to form a plurality of beamlets 15. The beam splitting device 16 may be a passive beam splitting device 16 such as, by way of non-limiting example, a diffractive beam splitting device. The beam splitting device 16 may also be a controllable beam splitting device such as, by way of non-limiting example, a spatial light modulator such as, by way of non-limiting example, a liquid crystal on silicon (LCoS) spatial light modulator.

In the illustrated embodiment, one or more optical devices 18 are located downstream of the one or more beam splitting devices 16 and are configured to receive the plurality of beamlets 15 from the one or more beam splitting devices 16 and collimate the plurality of beamlets 15. In exemplary embodiments, the optical device 18 collimates the plurality of beamlets 15 into a "stacked" planar array of beamlets 15 extending downstream along a single axis 20.

One or more multi-channel optical modulators 30 are positioned downstream of the one or more optical devices 18 to receive the beamlets 15 from the one or more optical devices 18. In exemplary embodiments, the one or more multi-channel optical modulators 30 are planar multi-channel optical modulators 30 having a plurality of respective channels 32 extending in a direction of travel of the beamlets 15. In other words, the respective channels 32 are also in a "stacked" planar array aligned along the axis 20 to receive respective beamlets 15 from the one or more optical devices 18. Thus, in the illustrated embodiment, the channels 32 are arranged in a plane that extends in at least one direction corresponding to a path of the beamlets 15. In exemplary embodiments, the one or more multi-channel optical modulators 30 may be a multi-channel electro-optical modulator or a multi-channel acousto-optical modulator.

A modulation state of each channel 32 of the multi-channel optical modulators 30 is separately or individually controllable to change at least one parameter of the respective beamlet. In exemplary embodiments, a modulation state of each channel 32 of the multi-channel optical modulators 30 is separately or individually controllable to modulate at least one of an intensity, phase, or polarization of a respective beamlet 15 and/or steer the respective beamlet 15 to have an angular deflection from the direction of the axis 20, thereby enabling precise control over the energy delivered to each point on a target plane 72.

In the illustrated embodiment, one or more filter elements 34 are positioned downstream of the one or more multi-channel optical modulator 30 to receive the respective beamlets 15 from the one or more multi-channel optical modulators 30 and transmit select ones of the respective beamlets 15 downstream toward the target plane 72. In exemplary embodiments, the one or more filter elements 34 are configured to filter the incoming respective beamlets 15 and forward or transmit downstream select ones of the respective beamlets 15 having a desired profile, amplitude, phase, or polarization. The one or more filter elements 34 may include, by way of non-limiting example, at least one of a pinhole filter element, a polarization filter element, a customized beam aperture element, or an obstacle filter element.

Positioned downstream of the one or more filter elements 34 are one or more optical elements 38. The one or more optical elements 38 may include one or more optical relay devices 40 and/or one or more remapping optics 42. The optical relay device 40 is configured to relay or transport the beamlets 15 from the one or more filter elements 34 over a particular distance to a scanning device 50 positioned downstream of the one or more filter elements 34. The optical relay device 40 ensures that the integrity and characteristics of the beamlets 15 are maintained during transmission to the scanning device 50. In exemplary embodiments, the optical relay device 40 may include one or more optical elements such as, by way of non-limiting example, a 4f optical system or lens arrangement. The one or more remapping optics 42 may include one or more optical elements to transform a one-dimensional spot array of the plurality of beamlets 15 to a two-dimensional spot array of the plurality of beamlets 15, or vice versa. In other words, the one or more remapping optics 42 are configured to rearrange the received beamlets 15 to produce or output a defined distribution of the beamlets 15 having a desired laser spot array or geometry on the target plane 72. Thus, in exemplary embodiments, by way of non-limiting example, the remapping optics 42 may transform an input of a line spot array of nine laser spots to output a three-by-three nine spot array. In exemplary embodiments, various spot patterns may be generated by the remapping optics 42 such as, by way of non-limiting example, one or more different line spot arrays, a hexagonal spot array, or other geometrical shapes. The spot patterns may have varied spot sizes within the array, equidistant or non-equidistant spacing between respective spots, or various quantities of spots within the array. For example, embodiments of the present disclosure enable quick switching between, by way of non-limiting example, a line spot array having six spots to a line spot array having four spots with varying distances between certain spots via control of the one or multi-channel optical modulators 30 and/or remapping optics 42. The ability to quickly switch between these spot patterns provides the apparatus 10 with versatile capabilities in addressing different geometric and material requirements during the additive manufacturing process. The remapping optic 42 may be passive or active. In exemplary embodiments, the remapping optic 42 may be any type of optical element or device capable of amplitude, phase, or polarization shifting such as, by way of non-limiting example, an LCoS spatial light modulator, metamaterial, or a digital light processor (DLP) device.

The beamlets 15 are directed downstream from the optical element 38 to the scanning device 50. The scanning device 50 is configured to selectively scan or direct the beamlets 15 onto the target plane 72 such as, by way of non-limiting example, onto a powder bed 80 residing on the build platform 70. Thus, in exemplary embodiments, the powder bed 80 may represent the target or build plane. The scanning device 50 can include mirrors or other optical elements that can be precisely controlled to direct the beamlets 15 at specific locations and scan the beamlets 15 across the powder bed 80 to melt and fuse powder build material according to the desired object geometry. The scanning device 50 may include one or more optical elements for steering the beamlets 15, performing magnification or demagnification operations on the beamlets 15, or any of the foregoing in combination. The scanning device 50 may include any type of scanning device such as, by way or non-limiting example, a Galvanometer scanner. The scanning device 50 may also be a gantry system configured to move various optical components of the apparatus 10 in multiple directions with respect to the build platform 70 to enable the beamlets 15 to be directed toward various areas of the build platform 70. In the illustrated embodiment, a focusing lens assembly 60 may be associated with the scanning device 50 or located downstream of the scanning device 50 to focus the beamlets 15 onto the powder bed 80. The focusing lens assembly 60 may include one or more optical elements that focus the beamlets 15 onto the build plane.

The build platform 70 supports the powder bed 80, which contains the build material in powder form that is to be pre-heated, fused, and/or post-cooled by the beamlets 15. The beamlets 15 may be scanned or directed across the powder bed via a scanning path 92, controlled by the scanning device 50, to ensure that the beamlets 15 follow a predetermined path over the surface of the powder bed 80, dictated by the desired geometry of the object being manufactured.

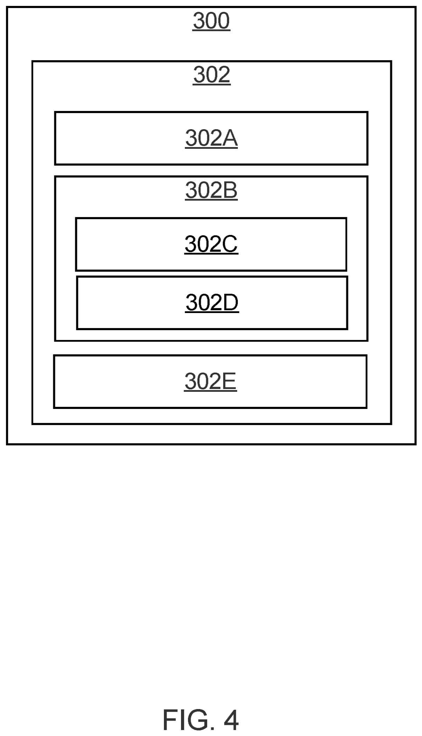

In the illustrated embodiment, one or more controllers 96 are communicatively coupled to the one or more laser beam sources 12, the one or more beam splitting devices 16 (if controllable as opposed to passive), the one or more remapping optics 42 (if controllable as opposed to passive), and the scanning device 50. The controller 96 is configured to generate control signals to selectively control the generation of the laser beam 14, the modulation state of the respective channels 32 of the one or more multi-channel optical modulators 30, the remapping of the beamlets 15 by the remapping optics 42, and the scanning of the beamlets 15 over the powder bed 80. This integrated control system allows for synchronized operation of the scanning and modulation processes for achieving high-quality manufacturing outcomes. The controller 96 may be configured similar to exemplary computing devices of the computing system 300 described below with reference to FIG. 4.

In operation, the laser beam source 12 generates the laser beam 14 which is directed downstream to the beam splitting device 16. In exemplary embodiments, the beam splitting device 16 splits the laser beam 14 to form a plurality of beamlets 15. The beamlets 15 travel downstream are collimated by the optical device 18. The collimated beamlets 15 are directed downstream to be incident upon respective channels 32 of the multi-channel optical modulator 30. The beamlets 15 are transformed by the multi-channel optical modulator 30 based at least on the modulation state of the particular or respective channel 32 incident upon by the respective beamlet 15 such as, by way of non-limiting example, a phase modulation. In exemplary embodiments, the respective channels 32 of the multi-channel optical modulator 30 may be manipulated or controlled by the controller 96 to have different channels 32 set to the same or different modulation states. The modulated beamlets 15 travel downstream and are filtered by the filter element 34 such that select ones of the modulated beamlets 15 are directed downstream to the remapping optic 42. The remapping optic 42 redistributes the beamlets 15, if needed or desired, to form a particular spot array. The spot array is directed downstream to the scanning device 50 to be scanned across the powder bed 80. By utilizing the multi-channel optical modulator 30 and/or remapping optic 42, the parameters and spot array can be switched quickly providing greater flexibility in various areas of interest on the build platform 70.

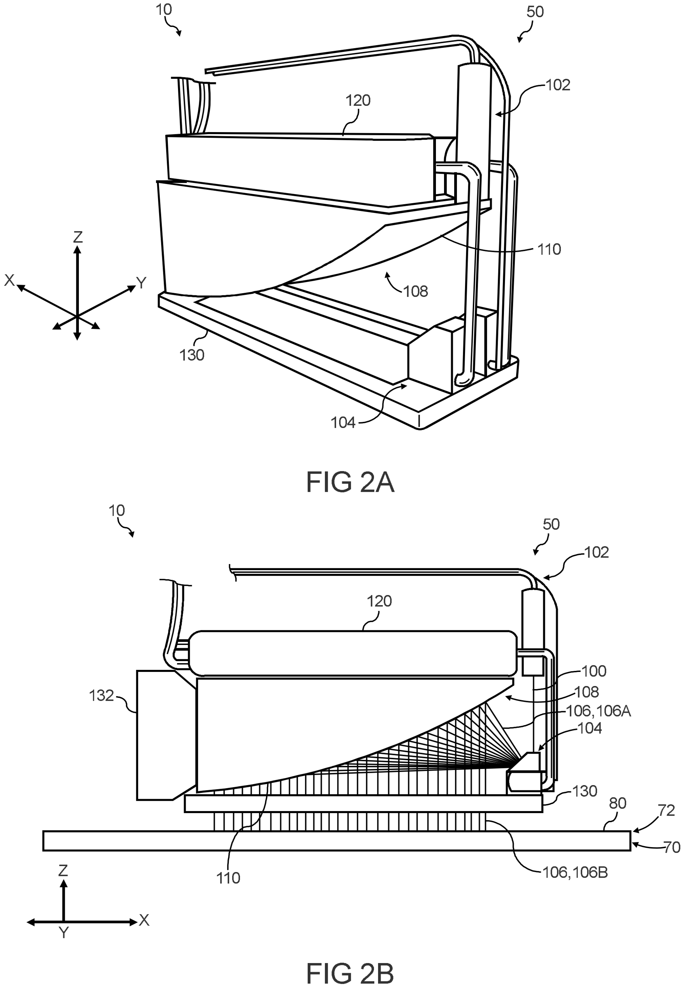

Referring now to FIGS. 2A and 2B, another exemplary embodiment of the scanning device 50 is depicted that may be used in the apparatus 10 for additively manufacturing three-dimensional objects is schematically depicted according to the present disclosure. FIG. 2A depicts a schematic perspective view of the scanning device 50, and FIG. 2B is a schematic side view of the scanning device 50. The scanning device 50 may be at least partly configured similar to the scanning device 50 depicted in FIG. 1, like numerals utilized to refer to like elements. In the illustrated embodiment, the scanning device 50 receives a laser beam 100 from a laser beam source 102. The laser beam 100 may be the laser beam 14 (FIG. 1) or one or more of the beamlets 15 (FIG. 1). The scanning device 50 includes one or more optical devices 104 configured to receive the laser beam 100 and direct a plurality of beamlets 106 downstream towards one or more mirror elements 108. In exemplary embodiments, the one or more optical devices 104 may include, by way of non-limiting example, an optical modulator such as a piezo acoustic Bragg cell transducer or acousto-optic modulator or deflector, a Kerr cell, or a combination of the foregoing. The one or more optical devices 104 may also include the beam splitting device 16, multi-channel optical modulator 30, and/or filter element 34 as described in FIG. 1. In exemplary embodiments, the one or more optical devices 104 create the plurality of beamlets 106 from the laser beam 100 and direct the beamlets 106 toward the one or more mirror elements 108. In exemplary embodiments, the one or more mirror elements 108 are disposed in a fixed position with respect to the one or more optical devices 104 and include a curved surface 110 that is reflective and disposed at least partially facing the build platform 70 and at least partially facing the one or more optical devices 104. In exemplary embodiments, the curved surface 110 has a contour such that the curved surface 110 is positioned at a greater distance from the build platform 70 (e.g., in a direction corresponding to the Z axis) proximate the one or more optical devices 104 than a location of the curved surface 110 distal to the one or more optical devices 104. In other words, in the illustrated embodiment, as the curved surface 110 transitions in a direction corresponding to the X axis in FIG. 2B away from the one or more optical devices 104, a distance between the curved surface 110 and the build platform 70 decreases. In exemplary embodiments, a radius of curvature of the curved surface 110 remains substantially constant in at least one direction. In other words, in the illustrated embodiment, the radius of curvature of the curved surface 110 in a direction corresponding to the X axis remains constant. However, it should be understood that the curved surface 110 may have a varying radius of curvature in a direction corresponding to the X axis or may have other types of curved geometries such as, by way of non-limiting example, an elliptical or parabolic curved geometry. In the illustrated embodiment, the curved surface 110 is uncurved in a direction corresponding to the Y axis. In other words, for a line drawn tangential to the curved surface 110 in a direction corresponding to the Y axis, such line is uncurved and remains in contact with the curved surface 110 for a span of the curved surface 110 in the direction corresponding to the Y axis. However, it should be understood that the curved surface 110 may also be configured with a curved surface geometry in the Y axis direction.

In the illustrated embodiment, the mirror element 108 extends across a defined span of the build platform 70, in the X axis direction in FIG. 2B, and is positioned such that the mirror element 108 reflects the beamlets 106 in a parallel orientation with respect to each other toward the build platform 70. In exemplary embodiments, the one or more optical devices 104 transmit a plurality of beamlets 106A toward the mirror element 108. The beamlets 106A are incident on the curved surface 110 of the mirror element 108 and are reflected as an array of parallel beamlets 106B axially aligned with each other in the X axis direction. In exemplary embodiments, the plurality of beamlets 106B may have a uniform spacing between adjacent respective beamlets 106B. However, it should be understood that the one or more optical devices 104 may generate an irregularly spaced array of beamlets 106A such that a corresponding irregularly spaced array of beamlets 106B impinge upon the powder bed 80 on the build platform 70. In exemplary embodiments, the geometric configuration of the curved surface 110 with respect to the source of the beamlets 106A is such that each of the beamlets 106A may have a different incoming angle of incidence toward the mirror element 108 but have a substantially same or uniform outgoing angle of incidence from the mirror element 108 with respect to the build platform 70. Thus, embodiments of the scanning device 50 are configured to form long arrays of axially aligned beam spots across the build platform 70.

In the illustrated embodiment, the scanning device 50 may include a heatsink 120 thermally coupled to the mirror element 108 and configured to dissipate thermal energy from the mirror element 108. The heatsink 120 may be fluidly coupled to a fluid source (not explicitly shown) for circulating a fluid through the heatsink 120 for thermal energy dissipation. The scanning device 50 may also include a frame assembly 130 for supporting various components of the scanning device 50, and the frame assembly 130 may be coupled to a carriage assembly 132. The carriage assembly 132 may be configured to move the scanning device 50 in one or more directions with respect to the build platform 70. The carriage assembly 132 may include a robotic mechanism and associated motors for movement of the scanning device 50 with respect to the build platform 70. However, it should be understood that the carriage assembly 132 may be other types of structures such as, by way of non-limiting example, a gantry system or a track assembly.

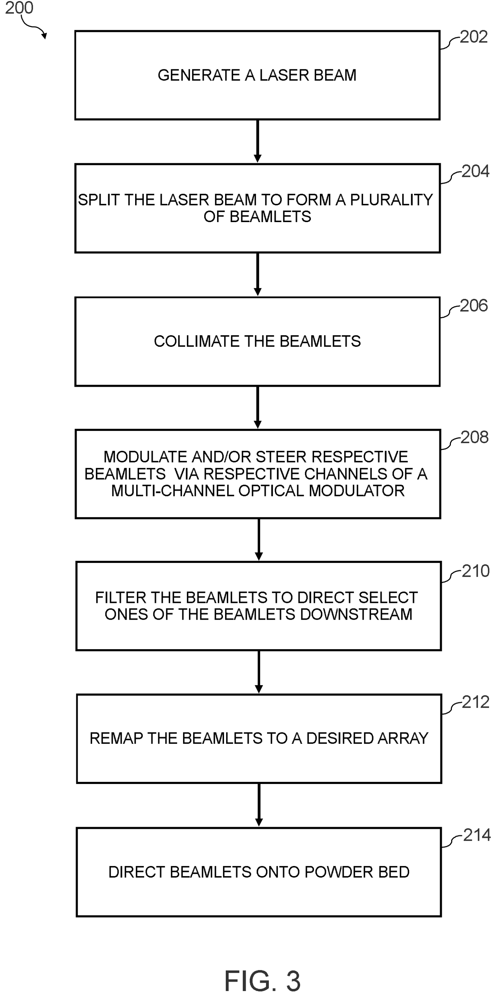

Referring now to FIG. 3, a flow diagram is presented depicting an exemplary embodiment of a method 200 for additively manufacturing three-dimensional objects in accordance with various aspects of the present disclosure. The method 200 illustrates a series of steps designed to control the characteristics of a laser beam in a manner that optimizes the additive manufacturing process, thereby enhancing the quality and precision of the manufactured objects.

The initial step 202 of the method 200 involves generating the laser beam 14. This step is performed by the laser beam source 12, which is configured to produce a coherent beam of light suitable for processing materials in an additive manufacturing environment. Following the generation of the laser beam 14, the method 200 proceeds to step 204, where the laser beam 14 is split to form a plurality of beamlets 15. Continuing to step 206 of the method 200, the beamlets 15 are collimated by the optical device 18. At step 208 of the method, the collimated beamlets are modulated and/or steered by respective channels 32 of the multi-channel optical modulator 30.

The method 200 then advances to step 210, where the beamlets 15 are filtered by the filter element 34 such that select ones of the beamlets 15 are directed downstream. At step 212 of the method 200, the beamlets 15 are remapped as needed to a desired array by the remapping optic 42. Finally, at step 214 of the method, the beamlets 15 are directed onto the powder bed 80. This step involves the scanning device 50, which steers the beamlets 15 onto the surface of the powder bed 80 where the material is melted and fused to form the three-dimensional object.

FIG. 4 provides an example computing system 300 according to example embodiments of the present disclosure. The computing devices or elements described herein, such as the controller 96 (FIG. 1), may include various components and perform various functions of the computing system 300 described below, for example.

As shown in FIG. 4, the computing system 300 can include one or more computing device(s) 302. The computing device(s) 302 can include one or more processor(s) 302A and one or more memory device(s) 302B. The one or more processor(s) 302A can include any suitable processing device, such as a microprocessor, microcontroller, integrated circuit, logic device, and/or other suitable processing device. The one or more memory device(s) 302B can include one or more computer-executable or computer-readable media, including, but not limited to, non-transitory computer-readable media, RAM, ROM, hard drives, flash drives, and/or other memory devices.

The one or more memory device(s) 302B can store information accessible by the one or more processor(s) 302A, including computer-readable instructions 302C that can be executed by the one or more processor(s) 302A. The computer-readable instructions 302C can be any set of instructions that when executed by the one or more processor(s) 302A, cause the one or more processor(s) 302A to perform operations. In some embodiments, the computer-readable instructions 302C can be executed by the one or more processor(s) 302A to cause the one or more processor(s) 302A to perform operations, such as any of the operations and functions for which the computing system 300 and/or the computing device(s) 302 are configured, such as controlling the splitting of the laser beam 14 to form the plurality of beamlets 15, controlling the modulation states of the respective channels of the multi-channel optical modulator 30, remapping the beamlets 15 by the remapping optic 42, the scanning of the beamlets 15 by the scanning device 50, or any combination of the foregoing. The computer-readable instructions 302C can be software written in any suitable programming language or can be implemented in hardware. Additionally, and/or alternatively, the computer-readable instructions 302C can be executed in logically and/or virtually separate threads on processor(s) 302A. The memory device(s) 302B can further store data 302D that can be accessed by the processor(s) 302A. For example, the data 302D can include models, lookup tables, databases, etc.

The computing device(s) 302 can also include a network interface 302E used to communicate, for example, with the other components of the computing system 300 (e.g., via a communication network). The network interface 302E can include any suitable components for interfacing with one or more network(s), including for example, transmitters, receivers, ports, controllers, antennas, and/or other suitable components. One or more devices can be configured to receive one or more commands from the computing device(s) 302 or provide one or more commands to the computing device(s) 302.

Thus, in exemplary embodiments, the present inventors have found that embodiments of the present disclosure enables the scaling to a large number of single beamlets whereas each of the single beamlets can be controlled separately. The controlling of the single beamlet can be a switching, modulation of the phase, amplitude or polarization state and/or a steering of the beam in a small angle. In exemplary embodiments, a single laser beam can be split among several "stacked" planar beamlets extending along a single axial direction. The beamlets can be used to steer the light along two axes, such that multiple parallel output beam "slices" that can impinge on the target area for pre-heating, melting and post-cooling control.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Further aspects are provided by the subject matter of the following clauses:
An apparatus for additively manufacturing three-dimensional objects, the apparatus comprising: a laser beam source configured to generate a laser beam; a beam splitting device located downstream from the laser beam source and configured to split the laser beam into a plurality of beamlets; an optical device located downstream of the beam splitting device and configured to collimate the plurality of beamlets; a multi-channel optical modulator disposed downstream of the optical device, wherein respective beamlets of the plurality of beamlets are directed to respective channels of the multi-channel optical modulator, wherein the respective channels of the multi-channel optical modulator independently control at least one of a steering or modulating of the respective beamlets; and a scanning device disposed downstream of the multi-channel optical modulator, the scanning device configured to scan the respective beamlets over at least a portion of a target plane.

The apparatus of the preceding clause, wherein the optical device is configured to collimate the plurality of beamlets into a planar array of beamlets.

The apparatus of any preceding clause, wherein the multi-channel optical modulator comprises a planar multi-channel optical modulator.

The apparatus of any preceding clause, further comprising a filter element positioned downstream of the multi-channel optical modulator and configured to transmit select ones of the respective beamlets downstream toward the target plane.

The apparatus of any preceding clause, further comprising an optical relay device disposed downstream of the filter element.

The apparatus of any preceding clause, wherein the filter element comprises at least one of an aperture filter element or a polarization filter element.

The apparatus of any preceding clause, wherein the beam splitting device comprises a diffractive beam splitting device.

The apparatus of any preceding clause, wherein the beam splitting device comprises a spatial light modulator.

The apparatus of any preceding clause, wherein the beam splitting device comprises a liquid crystal on silicon (LCoS) spatial light modulator.

The apparatus of any preceding clause, wherein the respective channels of the multi-channel optical modulator are configured to selectively control at least one of an amplitude, phase, polarization, or angle of the respective beamlets.

The apparatus of any preceding clause, further comprising a controller communicatively coupled to the multi-channel optical modulator and configured to generate at least one control signal to control a modulation state of each of the respective channels of the multi-channel optical modulator.

The apparatus of any preceding clause, further comprising a controller communicatively coupled to the beam splitting device and configured to control the splitting of the laser beam to form the plurality of beamlets.

The apparatus of any preceding clause, wherein the multi-channel optical modulator comprises at least one of a multi-channel electro-optical modulator or a multi-channel acousto-optical modulator.

The apparatus of any preceding clause, further comprising a remapping optical element positioned downstream of the multi-channel optical modulator configured to receive the plurality of beamlets and transform a one-dimensional spot array of the plurality of beamlets to a two-dimensional spot array of the plurality of beamlets.

The apparatus of any preceding clause, wherein the scanning device comprises at least one of a galvo scanner device or a gantry system.

The apparatus of any preceding clause, wherein the scanning device comprises: one or more optical modulators; and one or more curved reflective elements positioned downstream of the one or more optical modulators.

The apparatus of any preceding clause, wherein the scanning device further comprises one or more heatsinks.

The apparatus of any preceding clause, wherein the one or more curved mirror elements are disposed in a fixed position with respect to the one or more optical modulators.

A method for additively manufacturing three-dimensional objects, the method comprising: generating a laser beam with a laser beam source; splitting the laser beam to form a plurality of beamlets; collimating the plurality of beamlets via an optical device; independently controlling respective beamlets of the plurality of beamlets via respective channels of a multi-channel optical modulator disposed downstream of the optical device to at least one of steer or modulate the respective beamlets; and scanning, via a scanning device disposed downstream of the multi-channel optical modulator, the respective beamlets over at least a portion of a target plane.

The method of any preceding clause, wherein collimating the plurality of beamlets comprises collimating the plurality of beamlets into a planar array of beamlets.

The method of any preceding clause, further comprising transmitting, via a filter element positioned downstream of the multi-channel optical modulator, select ones of the respective beamlets downstream toward the target plane.

The method of any preceding clause, wherein transmitting, via the filter element, comprises transmitting the select ones of the respective beamlets via at least one of an aperture element or a polarization filter element.

The method of any preceding clause, wherein splitting the laser beam comprises splitting the laser beam via a diffractive beam splitting device.

The method of any preceding clause, wherein splitting the laser beam comprises splitting the laser beam via a spatial light modulator.

The method of any preceding clause, wherein splitting the laser beam via the spatial light modulator comprises splitting the laser beam via a liquid crystal on silicon (LCoS) spatial light modulator.

The method of any preceding clause, wherein independently controlling the respective beamlets comprises selectively controlling at least one of an amplitude, phase, polarization, or angle of the respective beamlets.

The method of any preceding clause further comprising, generating, via a controller communicatively coupled to the multi-channel optical modulator, at least one control signal to control a modulation state of each of the respective channels of the multi-channel optical modulator.

The method of any preceding clause, wherein splitting the laser beam comprises splitting the laser beam via a beam splitting device, and further comprising controlling, via a controller communicatively coupled to the beam splitting device, the splitting of the laser beam to form the plurality of beamlets.

The method of any preceding clause, wherein splitting the laser beam comprises splitting the laser beam via a beam splitting device, the method further comprising generating, via a controller communicatively coupled to the beam splitting device, at least one control signal to control the splitting of the laser beam to form the plurality of beamlets.

The method of any preceding clause, wherein the scanning device comprises one or more optical devices and one or more curved mirror elements positioned downstream of the one or more optical devices, and wherein scanning comprises reflecting, via the one or more curved mirror elements, the respective beamlets as an array of parallel beamlets onto the target plane.

The method of any preceding clause, wherein independently controlling the respective beamlets via the multi-channel optical modulator comprises independently controlling the respective beamlets via at least one of a multi-channel electro-optical modulator or a multi-channel acousto-optical modulator.

The method of any preceding clause, further comprising transforming, via one or more remapping optics positioned downstream of the multi-channel optical modulator, the plurality of beamlets from a one-dimensional spot array to a two-dimensional spot array.

A non-transitory computer-readable medium comprising computer-executable instructions, which, when executed by a processor associated with an additive manufacturing machine, cause the processor to perform a method comprising: generating a laser beam with a laser beam source; independently controlling, via a multi-channel optical modulator, respective beamlets of a plurality of beamlets split from the laser beam and collimated via an optical device located downstream from the laser beam source, by respective channels of the multi-channel optical modulator to at least one of steer or modulate the respective beamlets; and scanning, via a scanning device disposed downstream of the multi-channel optical modulator, the respective beamlets over at least a portion of a target plane.

The non-transitory computer-readable medium of any preceding clause, wherein the computer-executable instructions, which when executed by the processor, causes the processor to perform the method comprising: transmitting, via a filter element positioned downstream of the multi-channel optical modulator, select ones of the respective beamlets downstream toward the target plane.

The non-transitory computer-readable medium of any preceding clause, wherein the computer-executable instructions, which when executed by the processor, causes the processor to perform the method comprising: transmitting, via the filter element, the select ones of the respective beamlets via at least one of am aperture filter element or a polarization filter element.

The non-transitory computer-readable medium of any preceding clause, wherein the computer-executable instructions, which when executed by the processor, causes the processor to perform the method comprising: splitting the laser beam to form the plurality of beamlets via a spatial light modulator.

The non-transitory computer-readable medium of any preceding clause, wherein the computer-executable instructions, which when executed by the processor, causes the processor to perform the method comprising: splitting the laser beam to form the plurality of beamlets via a liquid crystal on silicon (LCoS) spatial light modulator.

The non-transitory computer-readable medium of any preceding clause, wherein the computer-executable instructions, which when executed by the processor, causes the processor to perform the method comprising: selectively controlling at least one of an amplitude, phase, polarization, or angle of the respective beamlets.

The non-transitory computer-readable medium of any preceding clause, wherein the computer-executable instructions, which when executed by the processor, causes the processor to perform the method comprising: generating, via a controller communicatively coupled to the multi-channel optical modulator, at least one control signal to control a modulation state of each of the respective channels of the multi-channel optical modulator.

The non-transitory computer-readable medium of any preceding clause, wherein the computer-executable instructions, which when executed by the processor, causes the processor to perform the method comprising: controlling, via a controller communicatively coupled to a beam splitting device, the splitting of the laser beam to form the plurality of beamlets.

The non-transitory computer-readable medium of any preceding clause, wherein the computer-executable instructions, which when executed by the processor, causes the processor to perform the method comprising: independently controlling the respective beamlets via at least one of a multi-channel electro-optical modulator or a multi-channel acousto-optical modulator.

The non-transitory computer-readable medium of any preceding clause, wherein the computer-executable instructions, which when executed by the processor, causes the processor to perform the method comprising: transforming, via a remapping optical element positioned downstream of the multi-channel optical modulator, the plurality of beamlets from a one-dimensional spot array to a two-dimensional spot array.

## Claims

1. A method for additively manufacturing three-dimensional objects, the method comprising:
generating a laser beam with a laser beam source;
splitting the laser beam to form a plurality of beamlets;
collimating the plurality of beamlets via an optical device;
independently controlling respective beamlets of the plurality of beamlets via respective channels of a multi-channel optical modulator disposed downstream of the optical device to at least one of steer or modulate the respective beamlets; and
scanning, via a scanning device disposed downstream of the multi-channel optical modulator, the respective beamlets over at least a portion of a target plane.

2. The method of claim 1, wherein collimating the plurality of beamlets comprises collimating the plurality of beamlets into a planar array of beamlets.

3. The method of any preceding claim, further comprising transmitting, via a filter element positioned downstream of the multi-channel optical modulator, select ones of the respective beamlets downstream toward the target plane.

4. The method of any preceding claim, wherein independently controlling the respective beamlets comprises selectively controlling at least one of an amplitude, phase, polarization, or angle of the respective beamlets.

5. The method of any preceding claim, further comprising transforming, via one or more remapping optics positioned downstream of the multi-channel optical modulator, the plurality of beamlets from a one-dimensional spot array to a two-dimensional spot array.

6. The method of any preceding claim, wherein splitting the laser beam comprises splitting the laser beam via a diffractive beam splitting device or a spatial light modulator.

7. The method of any preceding claim, further comprising generating, via a controller communicatively coupled to the multi-channel optical modulator, at least one control signal to control a modulation state of each of the respective channels of the multi-channel optical modulator.

8. The method of any preceding claim, wherein splitting the laser beam comprises splitting the laser beam via a beam splitting device, the method further comprising generating, via a controller communicatively coupled to the beam splitting device, at least one control signal to control the splitting of the laser beam to form the plurality of beamlets.

9. The method of any preceding claim, wherein the scanning device comprises one or more optical devices and one or more curved mirror elements positioned downstream of the one or more optical devices, and wherein scanning comprises reflecting, via the one or more curved mirror elements, the respective beamlets as an array of parallel beamlets onto the target plane.

10. An apparatus for additively manufacturing three-dimensional objects, the apparatus comprising:
a laser beam source configured to generate a laser beam;
a beam splitting device located downstream from the laser beam source and configured to split the laser beam into a plurality of beamlets;
an optical device located downstream of the beam splitting device and configured to collimate the plurality of beamlets;
a multi-channel optical modulator disposed downstream of the optical device, wherein respective beamlets of the plurality of beamlets are directed to respective channels of the multi-channel optical modulator, wherein the respective channels of the multi-channel optical modulator independently control at least one of a steering or modulating of the respective beamlets; and
a scanning device disposed downstream of the multi-channel optical modulator, the scanning device configured to scan the respective beamlets over at least a portion of a target plane.

11. The apparatus of claim 10, further comprising a filter element positioned downstream of the multi-channel optical modulator and configured to transmit select ones of the respective beamlets downstream toward the target plane, wherein
optionally, the filter element comprises at least one of an aperture element or a polarization filter element.

12. The apparatus of claim 10 or 11, wherein the beam splitting device comprises a diffractive beam splitting device or a spatial light modulator.

13. The apparatus of any of claims 10 to 12, wherein the respective channels of the multi-channel optical modulator are configured to selectively control at least one of an amplitude, phase, polarization, or angle of the respective beamlets.

14. The apparatus of any of claims 10 to 13, further comprising a controller communicatively coupled to the multi-channel optical modulator and configured to generate at least one control signal to control a modulation state of each of the respective channels of the multi-channel optical modulator.

15. The apparatus of any of claims 10 to 14, further comprising one or more remapping optics positioned downstream of the multi-channel optical modulator configured to receive the plurality of beamlets and transform a one-dimensional spot array of the plurality of beamlets to a two-dimensional spot array of the plurality of beamlets.
